# EUROPÄISCHE PATENTSCHRIFT

(11) **EP 2 286 931 B1**
(45) Veröffentlichungstag und Bekanntmachung des Hinweises auf die Patenterteilung: **01.02.2012**
(21) Anmeldenummer: 10168312.6
(22) Anmeldetag: 02.07.2010
(51) Int. Cl.: B06B 3/00, B29C 65/08

(54) **Ultraschallsonotrode und Ultraschallschweißvorrichtung mit einer derartigen Ultraschallsonotrode sowie Verwendung einer Ultraschallsonotrode und einer Ultraschallschweißvorrichtung**
Ultrasound sonotrode and ultrasound welding device with such an ultrasound sonotrode and use of an ultrasound sonotrode and an ultrasound welding device
Sonotrode à ultrasons et dispositif de soudure à ultrasons doté d'une telle sonotrode à ultrasons et utilisation d'une sonotrode à ultrasons et d'un dispositif de soudure à ultrasons

(30) Priorität: 10.08.2009 DE 102009037821
(43) Veröffentlichungstag der Anmeldung: 23.02.2011
(73) Patentinhaber: Telsonic Holding AG, 9552 Bronschhofen (CH)
(72) Erfinder: Möglich, Harmut, 76275 Ettlingen (DE)
(74) Vertreter: Dreiss

(56) Entgegenhaltungen:
- DE-A1-102005 038 344
- US-A1- 2006 225 842
- US-B2- 7 563 336

## Beschreibung

Die Erfindung betrifft eine Ultraschallsonotrode mit den Merkmalen des Oberbegriffs des Anspruchs 1. Die Erfindung betrifft außerdem eine Ultraschallschweißvorrichtung mit einer derartigen Ultraschallsonotrode, wobei die Ultraschallsonotrode um eine orthogonal zur Längsachse und durch das Zentrum verlaufende und parallel zur Arbeitsfläche verlaufende Drehachse drehbar gelagert ist. Schließlich betrifft die Erfindung eine Verwendung einer Ultraschallsonotrode und einer Ultraschallschweißvorrichtung.

Aus der DE 10 2005 022 179 A1 und der US 7,563,336 B2 ist jeweils eine Ultraschallsonotrode bekannt, bei der die Ultraschallschwingungen am freien Ende eines Basisschnittes eingekoppelt werden. Die DE 10 2005 038 344 A1 zeigt eine Vorrichtung zum Ultraschallbearbeiten von Werkstücken, bei der der Konverter in die Sonotrode integriert ist.

Die US 6,574,944 B2 zeigt eine Ultraschallschweißvorrichtung mit mehreren Ultraschallsonotroden, wobei die Ultraschallsonotroden sternförmig um eine Drehachse angeordnet sind und durch die Ausbauchung des zentralen Abschnitts angeregt werden. Der Konverter liegt in der Drehachse und axialer Richtung beabstandet zu den Ultraschallsonotroden. Dem Ultraschallsonotrodenstern liegt ein Gegenwerkzeug gegenüber, welches vier über dem Umfang verteilt angeordnete Ambosse aufweist.

Die WO 2005/102844 A1 zeigt eine sich drehende Ultraschallschweißvorrichtung zum Verschweißen von kontinuierlichen Schlauchabschnitten. Bei dieser Vorrichtung rotiert eine Ultraschallsonotrode oder drehen sich zwei Ultraschallsonotroden um eine Querachse, so dass jede Ultraschallsonotrode nach einem vollständigen Umlauf einen Schweißvorgang ausführen kann.

Derartige Ultraschallsonotroden und Ultraschallschweißvorrichtungen besitzen relativ große Abmessungen.

Der Erfindung liegt die Aufgabe zugrunde, eine Ultraschallsonotrode und/oder eine Ultraschallschweißvorrichtung bereit zu stellen, die kleiner bauen.

Diese Aufgabe wird mit einer Ultraschallsonotrode mit den Merkmalen des Anspruch 1 und mit einer Ultraschallschweißvorrichtung mit den Merkmalen des Anspruchs 9 gelöst. Außerdem kann eine Form-, Füll- und Schließmaschine für Verpackungen kleiner gebaut werden, wenn eine derartige Ultraschallsonotrode und/oder eine derartige Ultraschallschweißvorrichtung verwendet werden.

Die erfindungsgemäße Ultraschallsonotrode weist den wesentlichen Vorteil auf, dass der Konverter in Achsrichtung der Ultraschallsonotrode angeordnet ist und dadurch seitlich kein Platz benötigt wird. Sie baut sehr schlank, weshalb problemlos mehrere derartiger Ultraschallsonotroden nebeneinander angeordnet werden können. Dies ist auch für die erfindungsgemäße Ultraschallschweißvorrichtung zutreffend, so dass auch hier mehrere dieser Gebilde auf einer einzigen Drehachse angeordnet werden können. Die Drehachse dient lediglich zum Übertragen des Drehmoments und der elektrischen Verbindung mit dem Ultraschallgenerator.

Weitere Vorteile, Merkmale und Einzelheiten der Erfindung ergeben sich aus den Unteransprüchen und der nachfolgenden Beschreibung, in der auf die Zeichnung Bezug genommen und zwei Ausführungsbeispiele beschieben werden. Die in der Zeichnung dargestellten und in den Ansprüchen und in der Beschreibung erwähnten Merkmale können jeweils einzeln für sich erfindungswesentlich sein.

In der Zeichnung zeigen:
- Figur 1: eine perspektivische Ansicht einer Ultraschallsonotrode;
- Figur 2: eine Seitenansicht auf die Ultraschallsonotrode gemäß Figur 1 in Richtung des Pfeils II;
- Figur 3: eine Seitenansicht auf die Ultraschallsonotrode gemäß Figur 1 in Richtung des Pfeils III, teilweise aufgeschnitten;
- Figur 4: eine perspektivische Ansicht einer Ultraschall- schweißvorrichtung;
- Figur 5: eine Seitenansicht auf die Ultraschall- schweißvorrichtung gemäß Figur 4 in Richtung des Pfeils V;
- Figur 6: eine Seitenansicht auf die Ultraschall- schweißvorrichtung gemäß Figur 4 in Richtung des Pfeils VI;
- Figur 7: eine Draufsicht auf die Ultraschallschweißvor- richtung gemäß Figur 4 in Richtung des Pfeils VII; und
- Figur 8: eine Seitenansicht eines Ausschnitts einer anderen Ausführungsform einer Ultraschallschweißvorrichtung.

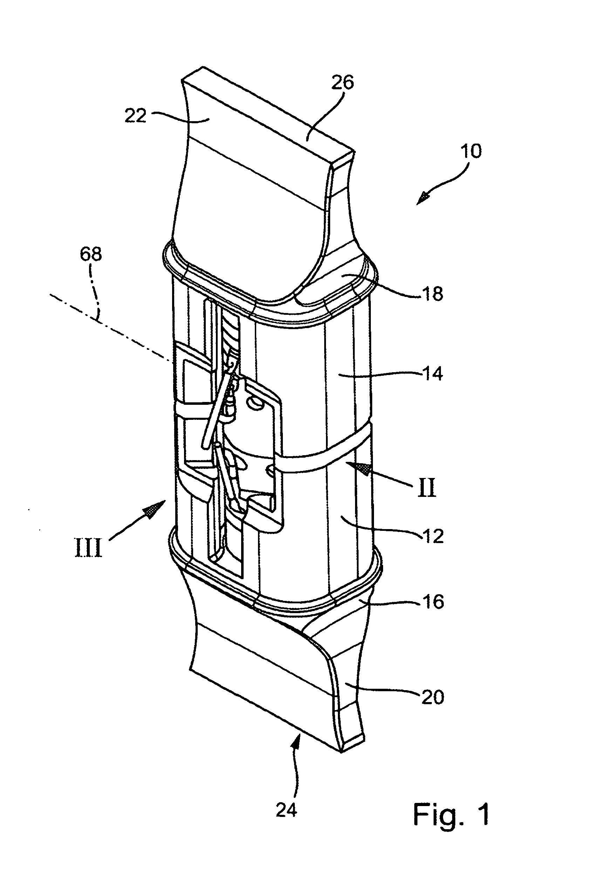

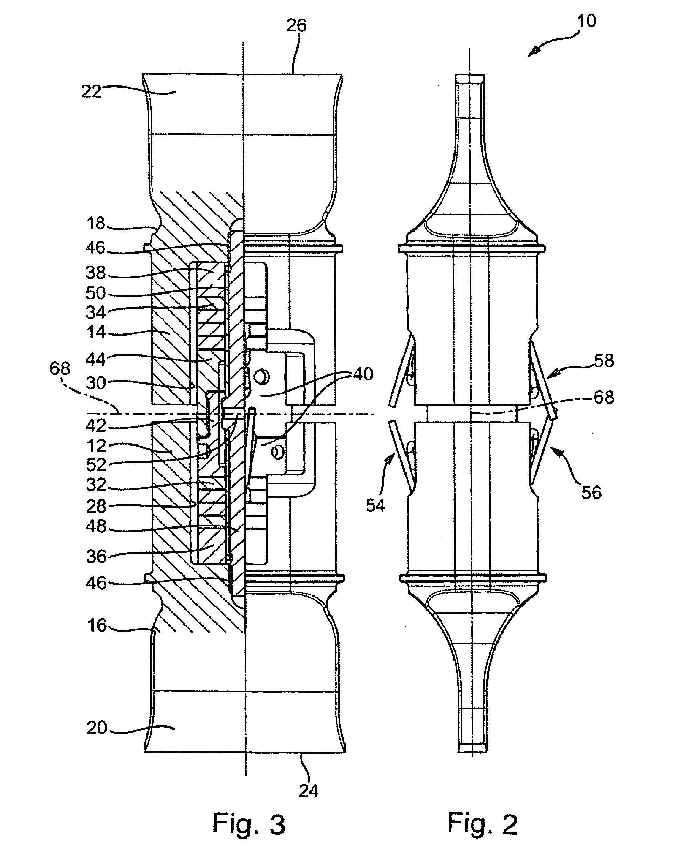

Die Figuren 1 bis 3 zeigen eine insgesamt mit 10 bezeichnete Ultraschallsonotrode, welche einen ersten und einen zweiten Grundabschnitt 12 und 14, einen ersten und einen zweiten Übergangsabschnitt 16 und 18 und einen ersten und einen zweiten Arbeitsabschnitt 20 und 22 aufweist. Die beiden Arbeitsabschnitte 20 und 22 besitzen jeweils Arbeitsflächen 24 und 26. Wie insbesondere aus der Figur 3 erkennbar, sind die Grundabschnitte 12 und 14 mit jeweils einem Sackloch 28 und 30 versehen, in welchen jeweils ein Einzelkonverter 32 und 34 angeordnet ist. Die Einzelkonverter 32 und 34 liegen über ein Druckstück 36 und 38 am Grund er Sacklöcher 28 und 30 an und sind mit einem Verbindungselement 40, welches aus zwei ineinander steckbaren Verbindungssteckern 42 und 44 besteht, miteinander gekoppelt.

Der Grund der Sacklöcher 28 und 30 ist mit koaxialen Gewindebohrungen 46 versehen, in welche ein Zuganker 48 eingeschraubt ist. Außerdem sind die Druckstücke 36 und 38 und die Einzelkonverter 32 und 34 sowie die Verbindungsstecker 42 und 44 hohl ausgeführt, so dass sie vom Zuganker 48 durchgriffen werden können. Der Zuganker 48 ist weiterhin mittels einer Isolierung 50 von diesen Elementen schallentkoppelt. Über den Zuganker 48 wird gewährleistet, dass die ersten und einen zweiten Grundabschnitte 12 und 14 und die dazwischen liegenden Elemente mit einer vorgebbaren Spannkraft plan axial aneinander anliegen. Zum Einstellen der Spannkraft weit der Zuganker eine Querbohrung 52 auf, über die er gedreht werden kann.

In der Figur 2 sind noch deutlich die HF-Anschlüsse 54 und 56 erkennbar, wobei die Polarisation an einer Seite 58 umgekehrt ist, so dass dieser Einzelkonverter 34 gegensinnig zum Einzelkonverter 32 schwingt.

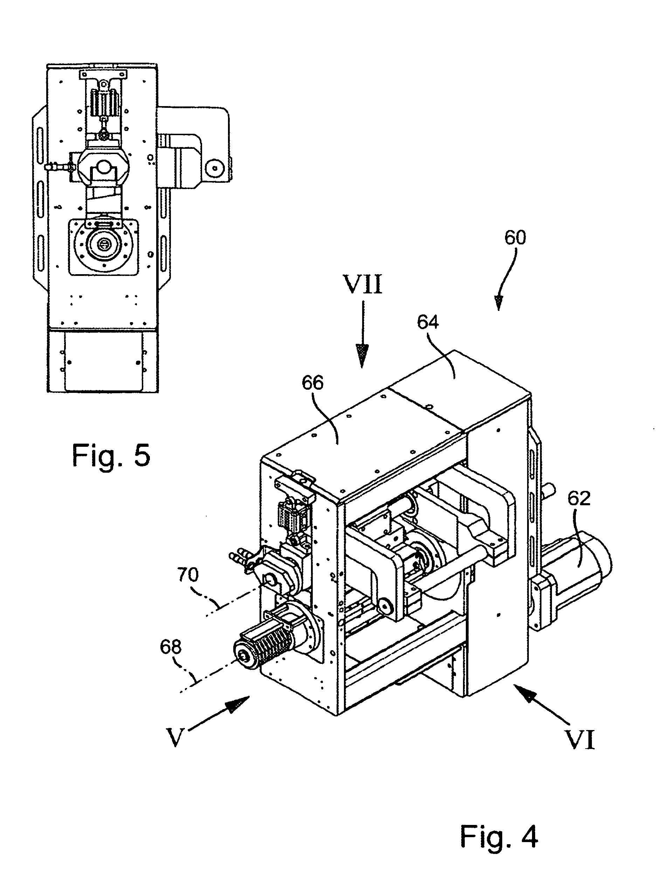

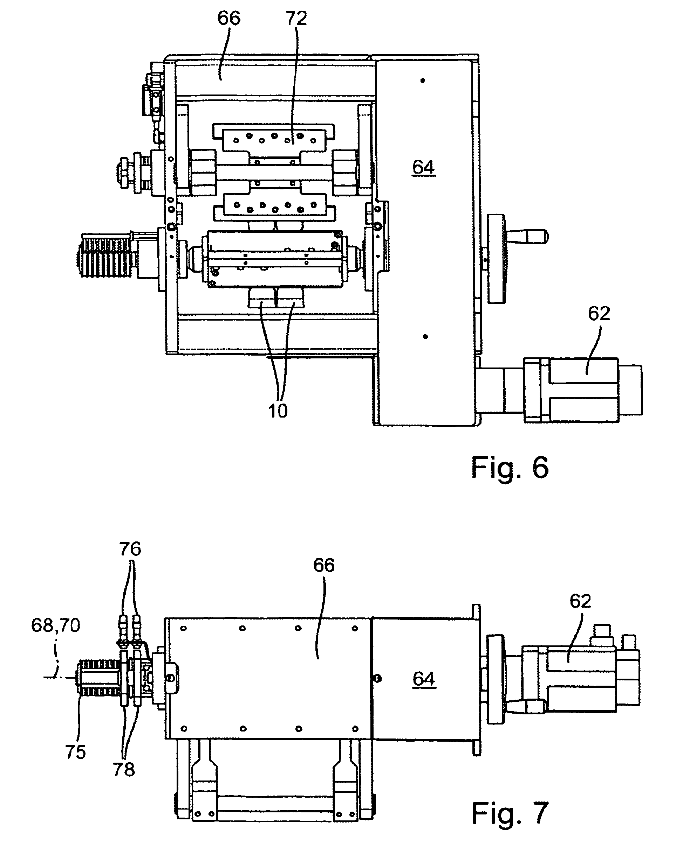

Die Figur 4 zeigt eine Ultraschallschweißvorrichtung 60 mit einem Antriebsmotor 62, einem Getriebegehäuse 64 und einem Maschinenrahmen 66 für zwei Drehachsen 68 und 70, welche die Ultraschallsonotrode 10 und ein Gegenwerkzeug 72 tragen. In Figur 6 ist erkennbar, dass an der Drehachse 68 zwei nebeneinander angeordnete Ultraschallsonotroden 10 befestigt sind, die mit einem entsprechend breiten Gegenwerkzeug 72 zusammenarbeiten. Die Drehachsen 68 und 70 laufen in unterschiedlichen Drehrichtung um. Mit einem Handrad kann der Spaltabstand zwischen den Arbeitsflächen 24 der Ultraschallsonotroden 10 und der Arbeitsfläche des Gegenwerkzeugs 72 eingestellt werden. Die Drehachse 68 ist in den Figuren 2 und 3 angedeutet und entspricht in der Figur 1 dem Pfeil II.

Aus den Figuren 4 bis 7 ist deutlich erkennbar, dass die Ultraschallschweißvorrichtung 60 sehr klein baut und wenig Bauraum benötigt. Die Übertagung der HF-Signale erfolgt an einer Stirnseite mittels Schleifringen 75, wobei hier auch Positionssensoren 76 und Drehwinkelgeber 78 vorgesehen sind. Bei der in den Figuren 4 bis 7 dargestellten Ultraschallschweißvorrichtung 60 können bei einer Umdrehung der Drehachsen 68 und 70 zwei Schweißvorgänge ausgeführt werden.

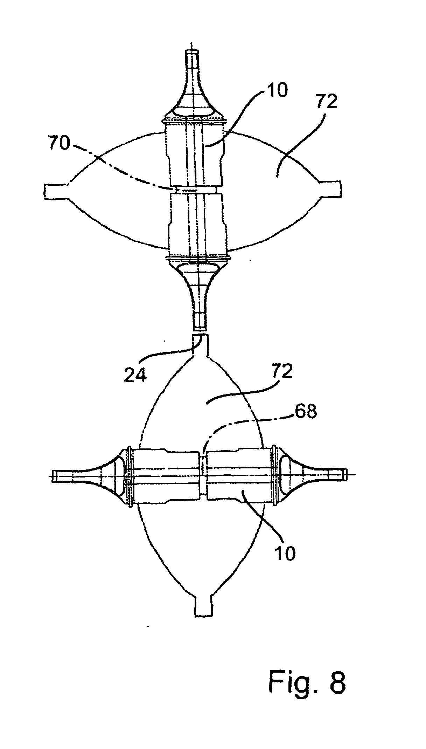

Die Figur 8 zeigt eine andere Ausführungsform der Anordnung der Ultraschallsonotrode 10 in einer (hier nicht dargestellten) Ultraschallschweißvorrichtung. Dabei sind auf jeder Drehachse 68 und 70 sowohl eine Ultraschallsonotrode 10 als auch ein Gegenwerkzeug 72 angeordnet, jedoch ist die eine Einrichtung gegenüber der andern um 90° in Drehrichtung verdreht, so dass eine Arbeitsfläche 24 der Ultraschallsonotrode 10 mit einer Arbeitsfläche des Gegenwerkzeugs 72 zusammenarbeiten kann. Alle Arbeitsflächen 24 der Ultraschallsonotrode und der Gegenwerkzeuge 72 liegen in einer Ebene.

## Patentansprüche

1. Ultraschallsonotrode (10) mit einem Grundabschnitt, einem Übergangsabschnitt und einem eine Arbeitsfläche aufweisenden Arbeitsabschnitt, wobei der Grundabschnitt mit einem in der Längsachse der Ultraschallsonotrode (10) liegenden Sackloch (28, 30) versehen ist und in diesem Sackloch (28, 30) ein Konverter angeordnet ist, **dadurch gekennzeichnet, dass**
- der Grundabschnitt einen ersten Grundabschnitt (12) und einen zweiten Grundabschnitt (14) aufweist,
- der Übergangsabschnitt einen ersten Übergangsabschnitt (16) und einen zweiten Übergangsabschnitt (18) aufweist,
- der Arbeitsabschnitt einen ersten Arbeitsabschnitt (20) und einen zweiten Arbeitsabschnitt (22) aufweist, deren Arbeitsflächen (24, 26) parallel zueinander angeordnet sind,
- der Konverter in Richtung der Längsachse der Ultraschallsonotrode (10) angeordnet ist,
- der Konverter zwei einander gegenüber liegende Seiten aufweist,
- an der einen Seite des Konverters der erste Grundabschnitt (12), der erste Übergangsabschnitt (16) und der erste Arbeitsabschnitt (20) anliegen, und
- an der anderen Seite des Konverters der zweite Grundabschnitt (14) der zweite Übergangsabschnitt (18) und der zweite Arbeitsabschnitt (22) anliegen.

2. Ultraschallsonotrode nach Anspruch 1, **dadurch gekennzeichnet, dass** sie bezüglich des Zentrums des Konverters (32, 34) spiegel- und/oder punktsymmetrisch aufgebaut ist.

3. Ultraschallsonotrode nach einem der vorhergehenden Ansprüche, **dadurch gekennzeichnet, dass** der Konverter (32, 34) aus zwei Einzelkonvertern (32, 34) aufgebaut ist, die mit einem Verbindungselement (40) in axialer Richtung miteinander verbunden sind.

4. Ultraschallsonotrode nach Anspruch 3, **dadurch gekennzeichnet, dass** jeder Einzelkonverter (32, 34) mit zwei Hochfrequenz- (HF-) Anschlüssen (54, 56) versehen ist.

5. Ultraschallsonotrode nach Anspruch 3 oder 4, **dadurch gekennzeichnet, dass** die Einzelkonverter (32, 34) von einem gemeinsamen Ultraschallgenerator angetrieben werden.

6. Ultraschallsonotrode nach einem der Ansprüche 3 bis 5, **dadurch gekennzeichnet, dass** das Verbindungselement (40) zwei ineinander steckbare Verbindungsstecker (42, 44) aufweist, die jeweils mit den Einzelkonvertern (32, 34) verbunden sind.

7. Ultraschallsonotrode nach einem der vorhergehenden Ansprüche, **dadurch gekennzeichnet, dass** jedes Sackloch (28, 30) mit einer koaxialen Gewindebohrung (46) versehen ist, dass die Konverter (32, 34) hohl ausgeführt sind und dass in die Gewindebohrungen (46) ein Zuganker (48) eingeschraubt ist.

8. Ultraschallsonotrode nach Anspruch 7, **dadurch gekennzeichnet, dass** der Zuganker (48) in seinem mittleren Bereich mit einer Querbohrung (52) versehen ist und dass die freien Endflächen der Grundabschnitte (12, 14) einen Abstand zueinander aufweisen, der insbesondere mindestens dem Durchmesser der Querbohrung (52) entspricht.

9. Ultraschallschweißvorrichtung (60) mit einer Ultraschallsonotrode (10) nach einem der vorhergehenden Ansprüche, **dadurch gekennzeichnet, dass** die Ultraschallsonotrode (10) um eine orthogonal zur Längsachse und durch das Zentrum und parallel zur Arbeitsfläche verlaufende Drehachse (68) drehbar gelagert ist.

10. Ultraschallschweißvorrichtung nach Anspruch 9, **dadurch gekennzeichnet, dass** mehrere dieser Ultraschallsonotroden (10) nebeneinander angeordnet sind.

11. Ultraschallschweißvorrichtung nach Anspruch 9 oder 10, **dadurch gekennzeichnet, dass** der Arbeitsfläche der Ultraschallsonotrode (10) ein insbesondere drehbar gelagertes Gegenwerkzeug (72) gegenüber liegt.

12. Ultraschallschweißvorrichtung nach einem der Ansprüche 9 bis 11, **dadurch gekennzeichnet, dass** wenigstens zwei Ultraschallsonotroden (10) vorgesehen sind, die in Drehrichtung um 90° zueinander versetzt sind.

13. Ultraschallschweißvorrichtung nach einem der Ansprüche 9 bis 12, **dadurch gekennzeichnet, dass** die Ultraschallsonotrode (10) auf der gleichen Drehachse (68) ein Gegenwerkzeug (72) aufweist, dessen Arbeitsflächen um 90° zu den Arbeitsflächen der Ultraschallsonotrode (10) versetzt sind und dass dieser Ultraschallsonotrode (10) mit Gegenwerkzeug (72) eine entsprechende Ultraschallsonotrode (10) mit Gegenwerkzeug (72) gegenüber liegt, die um 90° verdreht ist, so dass eine Arbeitsfläche der einen Ultraschallsonotrode (10) einer Arbeitsfläche des anderen Gegenwerkzeugs (72) gegenüber liegt.

14. Verwendung einer Ultraschallsonotrode nach einem der Ansprüche 1 bis 8 und/oder der Ultraschallschweißvorrichtung (60) nach einem der Ansprüche 9 bis 13 in einer Form-, Füll- und Schließmaschine für Verpackungen.

## Claims

1. Ultrasonic sonotrode (10) comprising a base section, a transition section and an operational section having an operational surface, wherein the base section is provided with a blind hole (28, 30) disposed in the longitudinal axis of the ultrasonic sonotrode (10) and wherein a converter is arranged in said blind hole (28, 30), **characterised in that**
- the base section has a first base section (12) and a second base section (14),
- the transition section has a first transition section (16) and a second transition section (18),
- the operational section has a first operational section (20) and a second operational section (22), the operational surfaces (24, 26) of which are arranged parallel to one another,
- the converter is arranged in the direction of the longitudinal axis of the ultrasonic sonotrode (10),
- the converter has two sides arranged opposing one another,
- the first base section (12), the first transition section (16) and the first operational section (20) lie against one side of the converter, and
- the second base section (14), the second transition section (18) and the second operational section (22) lie against the other side of the converter.

2. Ultrasonic sonotrode according to claim 1, **characterised in that** said sonotrode is configured with mirror symmetry and/or point symmetry relative to the centre of the converter (32, 34).

3. Ultrasonic sonotrode according to one of the preceding claims, **characterised in that** the converter (32, 34) is configured from two individual converters (32, 34) which are connected to one another in the axial direction with a connecting element (40).

4. Ultrasonic sonotrode according to claim 3, **characterised in that** each individual converter (32, 34) is provided with two high-frequency (HF) connections (54, 56).

5. Ultrasonic sonotrode according to claim 3 or 4, **characterised in that** the individual converters (32, 34) are driven by a common ultrasonic generator.

6. Ultrasonic sonotrode according to one of the claims 3 to 5, **characterised in that** the connecting element (40) comprises two connecting plugs (42, 44) which are pluggable into one another and are each connected to the individual converters (32, 34).

7. Ultrasonic sonotrode according to one of the preceding claims, **characterised in that** each blind hole (28, 30) is provided with a coaxial threaded bore (46), that the converters (32, 34) are configured hollow and that a tie rod (48) is screwed into the threaded bores (46).

8. Ultrasonic sonotrode according to claim 7, **characterised in that** the tie rod (48) is provided in the central region thereof with a transverse bore (52) and that the free end surfaces of the base sections (12, 14) have a separation from one another which corresponds, in particular, to at least the diameter of the transverse bore (52).

9. Ultrasonic welding device (60) comprising an ultrasonic sonotrode (10) according to one of the preceding claims, **characterised in that** the ultrasonic sonotrode (10) is mounted rotatable about a rotation axis (68) extending orthogonally to the longitudinal axis, through the centre, and parallel to the operational surface.

10. Ultrasonic welding device according to claim 9, **characterised in that** a plurality of said ultrasonic sonotrodes (10) are arranged adjacent to one another.

11. Ultrasonic welding device according to claim 9 or 10, **characterised in that** the operational surface of the ultrasonic sonotrode (10) is arranged opposing an, in particular, rotatably mounted counter-tool (72).

12. Ultrasonic welding device according to one of the claims 9 to 11, **characterised in that** at least two ultrasonic sonotrodes (10) are provided, offset from one another by 90° in the rotation direction.

13. Ultrasonic welding device according to one of the claims 9 to 12, **characterised in that** the ultrasonic sonotrode (10) comprises, on the same rotation axis (68), a counter-tool (72), the operational surfaces of which are offset from the operational surfaces of the ultrasonic sonotrode (10) by 90° and that said ultrasonic sonotrode (10) with said counter-tool (72) is arranged opposing a corresponding ultrasonic sonotrode (10) with counter-tool (72) which is rotated by 90°, such that an operational surface of one ultrasonic sonotrode (10) is arranged opposing an operational surface of the other counter-tool (72).

14. Use of an ultrasonic sonotrode according to one of the claims 1 to 8 and/or the ultrasonic welding device (60) according to one of the claims 9 to 13 in a form, fill and seal machine for packagings.

## Revendications

1. Sonotrode à ultrasons (10) comprenant une section de base, une section de transition et une section de travail présentant une surface de travail, ladite section de base étant pourvue d'un trou borgne (28, 30) situé dans l'axe longitudinal de ladite sonotrode à ultrasons (10) et un convertisseur étant disposé dans ce trou borgne (28, 30), **caractérisée par le fait que**
- ladite section de base comprend une première section de base (12) et une seconde section de base (14),
- ladite section de transition comprend une première section de transition (16) et une seconde section de transition (18),
- ladite section de travail comprend une première section de travail (20) et une seconde section de travail (22) dont les surfaces de travail (24, 26) sont disposées parallèlement entre elles,
- ledit convertisseur est disposé dans la direction de l'axe longitudinal de ladite sonotrode à ultrasons (10),
- ledit convertisseur présente deux faces situées en vis-à-vis l'une de l'autre,
- sur l'une des faces du convertisseur s'appuient ladite première section de base (12), ladite première section de transition (16) et ladite première section de travail (20), et
- sur l'autre face du convertisseur s'appuient ladite seconde section de base (14), ladite seconde section de transition (18) et ladite seconde section de travail (22).

2. Sonotrode à ultrasons selon la revendication 1, **caractérisée par le fait qu'**elle est réalisée de manière à être à symétrie spéculaire et/ou ponctuelle par rapport au centre dudit convertisseur (32, 34).

3. Sonotrode à ultrasons selon l'une quelconque des revendications précédentes, **caractérisée par le fait que** ledit convertisseur (32, 34) est constitué par deux convertisseurs individuels (32, 34) qui sont reliés entre eux dans la direction axiale par un élément de connexion (40).

4. Sonotrode à ultrasons selon la revendication 3, **caractérisée par le fait que** chacun des convertisseurs individuels (32, 34) est pourvu de deux bornes haute fréquence (HF) (54, 56).

5. Sonotrode à ultrasons selon la revendication 3 ou 4, **caractérisée par le fait que** lesdits convertisseurs individuels (32, 34) sont actionnés par un générateur d'ultrasons commun.

6. Sonotrode à ultrasons selon l'une quelconque des revendications 3 à 5, **caractérisée par le fait que** ledit élément de connexion (40) présente deux connecteurs (42, 44) aptes à être emboîtés qui sont reliés respectivement aux convertisseurs individuels (32, 34).

7. Sonotrode à ultrasons selon l'une quelconque des revendications précédentes, **caractérisée par le fait que** chaque trou borgne (28, 30) est pourvu d'un taraudage coaxial (46), que lesdits convertisseurs (32, 34) sont réalisés de manière à être creux et qu'un tirant d'ancrage (48) est vissé dans lesdits taraudages (46).

8. Sonotrode à ultrasons selon la revendication 7, **caractérisée par le fait que** ledit tirant d'ancrage (48) est pourvu d'un trou transversal (52) dans sa zone centrale et que les faces d'extrémité libres des sections de base (12, 14) présentent une distance l'une par rapport à l'autre qui correspond en particulier au moins au diamètre dudit trou transversal (52).

9. Dispositif de soudage par ultrasons (60) comprenant une sonotrode à ultrasons (10) selon l'une quelconque des revendications précédentes, **caractérisé par le fait que** ladite sonotrode à ultrasons (10) est logée à rotation autour d'un axe de rotation (68) qui est orthogonal par rapport à l'axe longitudinal et passe par le centre et s'étend parallèlement à la surface de travail.

10. Dispositif de soudage par ultrasons selon la revendication 9, **caractérisé par le fait que** plusieurs de ces sonotrodes à ultrasons (10) sont disposées les unes à côté des autres.

11. Dispositif de soudage par ultrasons selon la revendication 9 ou 10, **caractérisé par le fait qu'**un contre-outil (72) qui, en particulier, est logé à rotation, est situé en vis-à-vis de la surface de travail de la sonotrode à ultrasons (10).

12. Dispositif de soudage par ultrasons selon l'une quelconque des revendications 9 à 11, **caractérisé par le fait que** l'on prévoit au mois deux sonotrodes à ultrasons (10) qui sont décalées de 90° l'une par rapport à l'autre dans la direction de rotation.

13. Dispositif de soudage par ultrasons selon l'une quelconque des revendications 9 à 12, **caractérisé par le fait que** la sonotrode à ultrasons (10) présente, sur le même axe de rotation (68), un contre-outil (72) dont les surfaces de travail sont décalées de 90° par rapport aux surfaces de travail de ladite sonotrode à ultrasons (10) et qu'en vis-à-vis de cette sonotrode à ultrasons (10) avec contre-outil (72) est placée une sonotrode à ultrasons (10) correspondante avec contre-outil (72), qui est tournée de 90° de sorte qu'une surface de travail de l'une des sonotrodes à ultrasons (10) est située en vis-à-vis d'une surface de travail de l'autre contre-outil (72).

14. Utilisation d'une sonotrode à ultrasons selon l'une quelconque des revendications 1 à 8 et/ou du dispositif de soudage par ultrasons (60) selon l'une quelconque des revendications 9 à 13, dans une machine de formage, de remplissage et de scellage pour emballages.
